# EUROPÄISCHE PATENTSCHRIFT

(11) **EP 1 763 212 B1**
(45) Veröffentlichungstag und Bekanntmachung des Hinweises auf die Patenterteilung: **14.11.2012**
(21) Anmeldenummer: 06018844.8
(22) Anmeldetag: 08.09.2006
(51) Int. Cl.: H04M 3/42, H04W 4/12

(54) **Verfahren und System zum Vermitteln von SMS-Nachrichten innerhalb eines Telekommunikationsnetzwerkes**
Method and system for switching of SMS-messages within a telecommunication network
Procédure et système pour commutation des messages SMS dans un réseau de télécommunications

(30) Priorität: 09.09.2005 DE 102005042980
(43) Veröffentlichungstag der Anmeldung: 14.03.2007
(73) Patentinhaber: Deutsche Telekom AG, 53113 Bonn (DE)
(72) Erfinder: Hasemann, Jörg-Michael, Dr., 27321 Emtinghausen (DE)

(56) Entgegenhaltungen:
- EP-A- 1 507 420
- WO-A-02/35778
- WO-A-2004/102992
- GB-A- 2 409 614

## Beschreibung

Die vorliegende Erfindung betrifft ein Verfahren sowie ein System zum Vermitteln von SMS-Nachrichten innerhalb eines Telekommunikationsnetzwerkes, bei dem eine von einem mobilen Endgerät oder einer stationären Nachrichtenerzeugungseinheit generierte SMS-Nachricht nach Eingang in eineVermittlungseinrichtung (MSC) des Netzwerkbetreibers vor Weiterleitung in eine Nachrichten-Diensteinheit einem SMS-Routing-Server zugeleitet wird, mit welchem die eingehende SMS-Nachricht hinsichtlich definierter verteilkriterien gefiltert wird, wobei als definierte Verteilkriterien in einer netzbetreiberseitigen Profildatenbank hinterlegte alternative Adressen der alternativen Endgeräte bzw. Dienstserver des Nutzers verwendet werden, die zuvor durch den Nutzer nach Maßgabe gewünschter alternativer Endgeräte, die nach Art eines Mobilfunktelefons, PDA's, Fernsehers mit digitalem Empfangsteil oder Personalcomputers (PC) ausgebildet sind, direkt konfiguriert werden, um die für den Nutzer eingehenden SMS-Nachrichten an mindestens ein Endgerät seiner Wahl weiterzuleiten, wobei die SMS-Nachricht in ein passendes Datenformat nach Maßgabe des gewünschten Endgerätetyps konvertiert wird,

Der Kurzmitteilungsdienst (SMS - Short Message Service) ist ein Telekommunikationsdienst zur Übertragung kurzer Textnachrichten, der zuerst für den GSM-Mobilfunk entwickelt wurde, nun aber auch im Festnetz verfügbar ist. Mittels SMS ist es möglich, Textnachrichten auf SMS-fähige Endgeräte zu übertragen. Neben der Verwendung des Kurzmitteilungsdienstes zum Versenden von Textnachrichten an und von mobilen Endgeräten werden spezielle kodierte SMS verwendet, um beispielsweise Klingeltöne oder Gruppenlogos an mobile Endgeräte zu verschicken. Desweiteren werden speziell kodierte Textnachrichten verwendet, um beispielsweise das Vorliegen von MMS-Nachrichten mobilen Endgeräten anzuzeigen bzw. im Zusammenhang mit WAP-Push URLs für nachfolgende WAP-Sessions zu übertragen.

Wie aus dem allgemeinen Stand der Technik bekannt ist, werden SMS-Nachrichten, welche von einem mobilen Endgerät abgesetzt werden, innerhalb eines Mobilfunknetzes als Telekommunikationsnetzwerk an die zuständige Vermittlungseinrichtung (MSC - Mobile Switching Center) weitergeleitet und gelangen von dort aus zu einem SMS-Service-Center (SMSC- Short Message Service Center). Bei der herkömmlichen Technik ist vorgesehen, dass die hier eingehende SMS-Nachricht an das adressierte mobile Endgerät des Empfängers weitergeleitet wird. Falls das Endgerät des Empfängers nicht verfügbar ist, da dieses beispielsweise ausgeschaltet ist, wird die für den Empfänger bestimmte SMS-Nachricht im SMCS solange gespeichert, bis das Endgerät wieder verfügbar ist. Auf diesem Speicher- und Weiterleitungs-Mechanismus basiert die SMS-Technologie, welche somit verhindert, dass SMS-Nachrichten bei Unzustellbarkeit verloren gehen.

Aktuelle Untersuchungen haben ergeben, dass bis zu 80 % eingehender SMS-Nachrichten eigentlich sofort weiterleitbar wären, da das Endgerät von Empfängern wegen immer längerer Stand by-Zeiten und größerer Netzabdeckungen verfügbar sind. Hieraus resultiert, dass die Bedeutung der Zwischenspeicherung einer SMS-Nachricht im SMCS abnimmt. Zudem verursacht der immer mehr zunehmende Durchsatz an SMS-Nachrichten durch ein herkömmliches SMCS eine recht lange Zustellzeit einer SMS-Nachricht an das Endgerät des Empfängers.

Um diesen Nachteil zu beheben ist weiterhin allgemein bekannt, zwischen der Vermittlungseinrichtung (MSC) des Netzwerkbetreibers und der Nachrichtendiensteinheit (SMSC) einen SMS-Routing-Server in der SMS-Nachrichtenverkehr zu setzen, welcher SMS-Nachrichten herausfiltert. Die herausgefilterten SMS-Nachrichten können anschließend nach definierten Verteilkriterien umgeleitet werden. Falls der Empfänger einer SMS-Nachricht eine TV-Anwendung - beispielsweise im Rahmen einer Abstimmung unter Fernsehzuschauern - sein soll, wird die anhand der Empfänger-Telefonnummer der TV-Anwendung herausgefilterten SMS-Nachrichten per SMS-Routing-Server unverzüglich an diesen maschinellen Empfänger weitergeleitet. Durch diese technische Lösung wird die herkömmliche Nachrichten-Diensteinheit (SMSC) umgangen, welche somit weniger belastet ist. Dies führt insgesamt zu einer erheblichen Verkürzung von Zustellzeiten an Empfänger von SMS-Nachrichten.

Nachteilig ist bei diesem Verfahren und System des Standes der Technik allerdings, dass die Verteilkriterien in umständlicher Weise über den Netzwerkbetreiber beantragt und netzbetreiberseitig im SMS-Routing-Server umgesetzt werden müssen. Dies erfordert einen erheblichen Aufwand. Innerhalb der bestehenden Informationskette kann es zu Fehlern in der Informationsweiterleitung und damit letztendlich zu Konfigurationsfehlern des SMS-Routing-Servers kommen. Des Weiteren ist der Empfänger der SMS-Nachricht festgelegt auf die Nutzung des Endgeräts, welches unter der hiermit verbundenen Adresse (Telefonnummer) erreichbar ist für den Empfang eigener SMS-Nachrichten. Insgesamt erweisen sich die gegenwärtigen technischen Lösungen des Standes der Technik diesbezüglich als recht unflexibel.

Aus der EP 1 507 420 A1 geht ein System und ein Verfahren hervor zur Leitweglenkung von SMS-Nachrichten, deren Ursprung ein drahtloses Telefonnetzwerk ist und wobei die SMS-Nachrichten an ein kabelloses Telefon adressiert sind. Bei dieser bekannten Lösung wird verhindert, dass weiterzuleitende SMS-Nachrichten an ein nicht-aktives Endgerät gesendet werden. Bei der Verfügbarkeitsfeststellung wird geprüft ob der Nutzer in das System eingeloggt ist, um eine Kurzmitteilung zu Empfangen. Aus der Druckschrift geht jedoch nicht hervor, was bezüglich einer Verfügbarkeitsfeststellung bei alternativen mobilen Endgeräten geschieht, die im System eingeloggt sind, sich eventuell nur vorübergehend außerhalb der Funkreichweite befinden.

Es ist daher die Aufgabe der vorliegenden Erfindung, ein Verfahren sowie ein System zum Vermitteln von SMS-Nachrichten zu schaffen, welches auf einfache Weise die Zustellung auf alternative Endgeräte ermöglicht, wobei eine Auswahl individuell durch den Nutzer konfigurierbar ist.

Die Aufgabe wird ausgehend von einem Verfahren gemäß dem Oberbegriff von Anspruch 1 in Verbindung mit dessen kennzeichnenden Merkmalen gelöst. Systemtechnisch wird die Aufgabe durch Anspruch 5 gelöst. Die jeweils rückbezogenen abhängigen Ansprüche geben vorteilhafte Weiterbildungen der Erfindung wieder.

Die Erfindung schließt die technische Lehre ein, dass die alternativen Adressen in Form von Telefonnummern ausgebildet sind, und die Verfügbarkeit des alternativen Endgeräts bedarfsweise bei Vorhandensein einer hieran zu übermittelnden SMS-Nachnicht, per Verbindungsaufbaubestätigung (ACK) festgestellt wird, ehe die hierfür vorgesehene SMS-Nachricht hieran übermittelt wird, wobei solche SMS-Nachrichten, die der Signalisierung eingegangener MMS, der Verwendung im Zusammenhang mit WAP-Push, der Übermittlung von Klingeltönen oder Gruppenlogos dienen, anhand ihrer spezifischen Kodierung erkannt werden, um eine Weiterleitung an alternative Endgeräte zu unterbinden oder eine Weiterleitung abhängig von diesbezüglichen benutzerspezifischen Einstellungen zu machen.

Der Vorteil der erfindungsgemäßen Lösung liegt insbesondere darin, dass hiermit die Zustellung von SMS-Nachrichten systemtechnisch optimiert wird, so dass diese zügig den Empfänger auf einem Endgerät seiner Wahl erreichen. Die erfindungsgemäße Lösung erlaubt es somit, SMS-Nachrichten als universelle endgeräteunabhängige aber nutzerspezifische Echtzeit-Benachrichtigungen zu etablieren, unabhängig davon, ob mobile Endgeräte zur Nutzung verwendet werden. Mit der Etablierung als universelle endgeräteunabhängige aber nutzerspezifische Echtzeit-Benachrichtigungstechnik gewinnt das erfindungsgemäße Verfahren ein aufgrund der gesteigerten Reichweite und Erreichbarkeit der Empfänger eine noch höhere Attraktivität.

Durch die Konvertierung der SMS-Nachricht durch den Routing-Server in ein dem Typ des alternativen Endgeräts entsprechendem Datenformat, kann als optionales Datenformat auch ein Audio-Protokoll - wie MP3, AAC, WAV, MIDI und dergleichen - genutzt werden und eine zu vermittelnde Textnachricht in einem solchen Fall per sogenanntem Text-To-Speech-System in Sprach- bzw. Audio umgewandelt und übertragen werden.

Ergänzend oder alternativ hierzu ist es jedoch auch möglich, dass eine zunächst nicht zustellbare SMS-Nachricht im Bereich des Routing-Servers zwischengespeichert wird, und dass die SMS-Nachricht zugestellt wird, sobald das gewünschte alternative Endgerät wieder verfügbar ist, d.h. sich im Telekommunikationsnetz angemeldet hat. Diese die Erfindung verbessernde Maßnahme ist wegen Unterbrechungen in der Verfügbarkeit insbesondere bei Mobilfunkendgeräten als alternatives Endgerät nützlich.

Gemäß einer weiteren, die Erfindung verbessernden Maßnahme ist vorgesehen, dass die Weiterleitung an ein alternatives Endgerät unter Nutzung des sogenannten "Session Initiation Protocol" (SIP) oder SIP/SIMPLE-Protokolls durchgeführt wird. Bei dem SIP handelt es sich um ein Netzwerkprotokoll zum Aufbau einer Kommunikationssitzung zwischen zwei und mehreren Nutzern. Das Protokoll wird in dem Standard RFC 3261 spezifiziert und wird gewöhnlich auf dem Gebiet der IP-Telefonie verwendet.

Unter Verwendung von SIP kann der erfindungsgemäße Routing-Server in vorteilhafter Weise mittels SIP-INVITE-Anfrage die Verbindung zum alternativen Endgerät aufbauen. Die SIP-INVITE-Ankage enthält dann im Anhang unter Nutzung des sogenannten "Session Description Protocol" (SDP) das für die eigentliche Übertragung vorgesehene Datenformat (Medienstromformat). Sollte eine SIP-INVITE-Anfrage negativ quittiert werden, so wird nach der vorstehend erläuterten Verfahrensweise vorgegangen. In dem Falle, dass dies auch nicht zum Erfolg führt, wird vorgeschlagen, den Konfigurationseintrag des Nutzers in der Profildatenbank entsprechend zu markieren, um diesen von einer weiteren Verwendung auszuschließen und dem Nutzer die Möglichkeit zu geben, eine Berichtigung vorzunehmen. Hat die SIP-INVITE-Anfrage jedoch Erfolg, überträgt der erfindungsgemäße Routing-Server nach Empfang einer Verbindungsaufbaubestätigung (ACK) des angesprochenen alternativen Endgeräts die SMS-Nachricht.

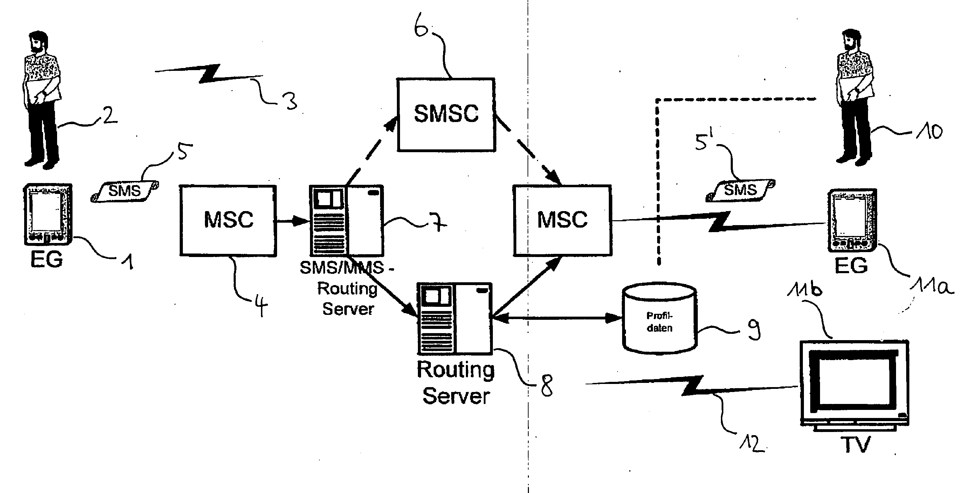

Weitere, die Erfindung verbessernde Maßnahmen werden nachstehend gemeinsam mit der Beschreibung eines bevorzugten Ausführungsbeispiels der Erfindung anhand der einzigen Figur näher dargestellt. Die Figur zeigt ein System zur Vermittlung von SMS-Nachrichten innerhalb eines Telekommunikationsnetzwerks.

Gemäß Figur ist ein Endgerät 1 eines ersten Nutzers 2 über ein Telekommunikationsnetzwerk 3 an eine Vermittlungseinrichtung 4 eines Netzwerkbetreibers angeschlossen. Das Telekommunikationsnetzwerk 3 ist in diesem Fall ein Mobilfunknetz und das Endgerät 1 ist als Mobilfunkendgerät ausgebildet. Über das Endgerät 1 kann der Nutzer 2 SMS-Nachrichten 5 absetzen, welche nach Eingang in die Vermittlungseinrichtung 4 nicht direkt an eine Nachrichtendiensteinheit 5 weitergeleitet werden, sondern zunächst einem SMS-Routing-Server 7 zugehen.

Der SMS-Routing-Server 7 filtert eingehende SMS-Nachrichten 5 hinsichtlich definierter Verteilkriterien - wie Adressierungen. Dem SMS-Routing-Server 7 steht ein weiterer Routing-Server 8 zur Seite, dem die gefilterten SMS-Nachrichten 5 zugeleitet werden. Der ergänzende Routing-Server 8 steht mit einer Profildatenbank 9 in Verbindung und nutzt die hierin individuell von einem anderen Nutzer 10 (Empfänger) individuell festgelegten Verteilkriterien. Der andere Nutzer 10 nimmt diese Konfiguration über eine Datenfernverbindung mittels Personalcomputer vor (Strichlinie).

Die in der Profildatenbank 9 durch den Nutzer 10 hinterlegten Verteilkriterien sind alternative Adressen für entsprechend alternative Endgeräte 11 a, 11b, welche der Nutzer 10 zum Empfangen von an ihn gerichteten SMS-Nachrichten 5 zu nutzen wünscht. Bei dem Endgerät 11a handelt es sich um ein herkömmliche mobiles Endgerät nach Art eines Mobilfunktelefons, wogegen als Alternative hierzu das andere Endgerät 11b nach Art eines Fernsehgeräts ausgebildet ist, welches über einen digitalen Fernsehkanal 12 mit dem Routing-Server 8 in Verbindung steht. Im Falle des Empfangs einer SMS-Nachricht 5 über das nach Art eines Fernsehgeräts ausgebildete alternative Endgerät 11b des Nutzers 10 ist die SMS-Nachricht 5 in ein entsprechendes fernsehtaugliches Datenformat zu bringen.

Über den Routing-Server 8 wird die Verfügbarkeit des gewünschten Endgeräts 11a oder 11b festgestellt, ehe die hierfür vorgesehene SMS-Nachricht 5' übermittelt wird. Dies erfolgt in diesem Ausführungsbeispiel in periodischen Zeitabständen. Sollte festgestellt werden, dass das gewünschte alternative Endgerät 11a oder 11b nicht verfügbar ist, weil dieses beispielsweise ausgeschaltet ist, so wird die für den Nutzer 10 bestimmte SMS-Nachricht 5' auf herkömmlichem Wege über die Nachrichten-Diensteinheit 6 versendet.

Die Erfindung beschränkt sich nicht auf das vorstehend beschriebene bevorzugte Ausführungsbeispiel. Es sind vielmehr auch Abwandlungen hiervon denkbar, welche vom Schutzumfang der nachfolgenden Ansprüche umfasst sind. So beschränkt sich die Erfindung nicht allein auf die Verwendung eines Mobilfunkendgeräts oder Fernsehgeräts als alternatives Endgerät 11 a bzw. 11b, durch welche der Nutzer 10 je nach seiner persönlichen Konfiguration der Profildaten in der Profildatenbank 9 SMS-Nachrichten 5 oder ähnliche Informationen empfangen kann. So können alternative Endgeräte auch als PDA (Personal Digital Assistant) mit Mobilfunkschnittstelle, PC (Personalcomputer) mit Telekommunikationsanschluss und dergleichen.

### Bezugszeichenliste

- 1: Endgerät
- 2: erster Nutzer
- 3: Telekommunikationsnetzwerk
- 4: Vermittlungseinrichtung (MSC)
- 5,5': SMS-Nachricht
- 6: Nachrichten-Diensteinheit (SMSC)
- 7: SMS-Routing-Server
- 8: Routing-Server
- 9: Profildatenbank
- 10: anderer Nutzer
- 11a,b: alternatives Endgerät
- 12: Fernsehkanal

## Patentansprüche

1. Verfahren zum Vermitteln von SMS-Nachrichten (5) innerhalb eines Telekommunikationsnetzwerkes (3), bei dem eine von einem mobilen Endgerät (1) oder einer stationären Nachrichtenerzeugungseinheit generierte SMS-Nachricht (5) nach Eingang in eine Vermittlungseinrichtung (MSC) des Netzwerkbetreibers vor Weiterleitung in eine Nachrichten-Diensteinheit (6) einem SMS-Routing-Server (7) zugeleitet wird, mit welchem die eingehende SMS-Nachricht (5) hinsichtlich definierter Verteilkriterien gefiltert wird, wobei als definiertes Verteilkriterien in einer netzbetreiberseitigen Profildatenbank (9) hinterlegte alternative Adressen der alternativen Endgeräte (11a, 11b) bzw. Dienstserver des Nutzers (10) verwendet werden, die zuvor durch den Nutzer (10) nach Maßgabe gewünschter alternativer Endgeräte (11a,11b), die nach Art eines Mobilfunktelefons, PDA's, Fernsehers mit digilalem Empfangsteil oder Personalcomputers (PC) ausgebildet sind, direkt konfiguriert werden, um die für den Nutzer (10) eingehenden SMS-Nachrichten (5') an mindestens ein Endgerät (11a,11b) seiner Wahl weiterzuleiten, wobei die SMS-Nachricht (5') in ein passendes Datenformat nach Maßgabe des gewünschten Endgerätetyps konvertiert wird, **dadurch gekennzeichnet, dass** die alternativen Adressen in Form von Telefonnummern ausgebildet sind, und die Verfügbarkeit des alternativen Endgeräts (11a, 11b) bedarfsweise bei Vorhandensein einer hieran zu übermittelnden SMS-Nachricht (5), per Verbindungsaufbaubestätigung (ACK) festgestellt wird, ehe die hierfür vorgesehene SMS-Nachricht (5') hieran übermittelt wird, wobei solche SMS-Nachrichten (5), die der Signalisierung eingegangener MMS, der Verwendung im Zusammenhang mit WAP-Push, der Übermittlung von Klingeltönen oder Gruppenlogos dienen, anhand ihrer spezifischen Kodierung erkannt werden, um eine Weiterleitung an alternative Endgeräte (11a,11b) zu unterbinden oder eine Weiterleitung abhängig von diesbezüglichen benutzerspezifschen Einstellungen zu machen.

2. Verfahren nach Anspruch 1,
**dadurch gekennzeichnet, dass** die SMS-Nachricht (5) auf herkömmlichem Wege über die Nachrichten-Diensteinheit (6) versendet wird, falls das gewünschte alternative Endgerät (11a,11b) nicht verfügbar ist.

3. Verfahren nach Anspruch 1,
**dadurch gekennzeichnet, dass** die SMS-Nachricht (5) zwischengespeichert wird, falls das gewünschte alternative Endgerät (11a,11b) nicht verfügbar ist, und dass die SMS-Nachricht (5) zugestellt wird, sobald das gewünschte alternative Endgerät (11a,11b) wieder verfügbar ist.

4. Verfahren nach Anspruch 1,
**dadurch gekennzeichnet, dass** die Weiterleitung an ein alternatives Endgerät (11a,11b) unter Nutzung des Session Initiation Protocol (SIP) oder SIP/SIMPLE-Protokolls durchgeführt wird.

5. System zum Vermitteln von SMS-Nachrichten (5) innerhalb eines Telekommunikationsnetzwerkes (3), bei dem eine von einem mobilen Endgerät (11a,11b) oder einer stationären Nachrichtenerzeugungseinheit generierte SMS-Nachricht (5) nach Eingang in eine Vermittlungseinrichtung (4) des Netzwerkbetreibers vor Weiterleitung in eine Nachrichten-Diensteinheit (6) einem SMS-Routing-Server (7) zugeht, der die eingehende SMS-Nachricht (5) hinsichtlich definierter Verteilkriterien filtert, wobei ein ergänzender Routing-Server (8) als definierte Verteilkriterien in einer Profildatenbank (9) hinterlegte alternative Adressen der alternativen Endgeräte (11a,11b) bzw. Dienstserver des Nutzers (10) nutzt, die durch den Nutzer (10) nach Maßgabe gewünschter alternativer Endgeräte (11a,11b) konfiguriert sind, die nach Art eines Mobilfunktelefons, PDA's, Fernsehers mit digitalem Empfangsteil oder Personalcomputers (PC) ausgebildet sind, um die für den Nutzer (10) eingehenden SMS-Nachrichten (5') an mindestens ein Endgerät (11a,11b) seiner Wahl weiterzuleiten, wobei die SMS-Nachricht (5') in ein passendes Datenformat nach Maßgabe des gewünschten Endgerätetyps konvertiert wird,
**dadurch gekennzeichnet, dass** die alternativen Adressen in Form von Telefonnummern ausgebildet sind, wobei für eine vorherige Verfügbarkeitsfeststellung des alternativen Endgeräts (11a, 11b) bedarfsweise bei Vorhandensein einer hieran zu übermittelnde SMS-Nachricht (5) der Routing Server (8) erst nach Empfang einer Verbindungsaufbaubestätigung (ACK) des alternativen Endgeräts (11a,11b) die SMS-Nachricht (5') an das alternative Endgerät (11a,11b) überträgt, wobei solche SMS-Nachrichten (5), die der Signalisierung eingegangener MMS, der Verwendung im Zusammenhang mit WAP-Push, der Übermittlung von Klingeltönen oder Gruppenlogos dienen, anhand ihrer spezifischen Kodierung erkannt werden, um eine Weiterleitung an alternative Endgeräte (11a,11b) zu unterbinden oder eine Weiterleitung abhängig von diesbezügliche benutzerspezifischen Einstellungen zu machen.

6. System nach Anspruch 5,
**dadurch gekennzeichnet, dass** der Routing-Server (8) mittels SIP-INVITE-Anfrage die Verbindung zum alternativen Endgerät (11a,11b) aufbaut.

7. System nach Anspruch 5,
**dadurch gekennzeichnet, dass** der Routing Server (8) erst nach Empfang einer Verbindungsaufbaubestätigung (ACK) des alternativen Endgeräts (11a, 11b) die SMS-Nachricht (5') an das alternative Endgerät (11a, 11b) überträgt.

## Claims

1. Method for switching SMS messages (5) within a telecommunications network (3), in which an SMS message (5) generated by a mobile terminal (1) or a stationary message generating unit is transmitted to an SMS routing server (7) after receipt in a switching unit (MSC) of the network operator and before being forwarded to a message service unit (6), with which routing server the incoming SMS message (5) is filtered with respect to defined distribution criteria, wherein alternative addresses of the alternative terminals (11a, 11b) or service server of the user (10) that are stored in a profile database (9) of the network operator and have previously been configured directly by the user (10) in accordance with desired alternative terminals (11a, 13b) implemented in the manner of a mobile telephone, PDA, television with digital receiving section or personal computer (PC) are used as the defined distribution criteria in order to forward the incoming SMS messages (5') for the user (10) to at least one terminal (11a, 11b) of his choice, wherein the SMS message (5') is converted into an appropriate data format in accordance with the desired terminal type, **characterized in that** the alternative addresses are implemented in the form of telephone numbers, and the availability of the alternative terminal device (11a, 11b) is ascertained as needed via connection setup acknowledgement (ACK) when an SMS message (5) is present that is to be transmitted thereto, prior to transmission thereto of the SMS message (5') intended therefor, wherein the SMS messages (5) that serve to signal received MMS, that facilitate use in conjunction with WAP push, or that serve to transmit ring tones or group logos are detected based on their specific encoding in order to suppress forwarding to alternative terminals (11a, 11b) or to carry out forwarding as a function of user-specific settings in this regard.

2. Method according to claim 1,
**characterized in that** the SMS message (5) is transmitted by conventional means through the message service unit (6) if the desired alternative terminal device (11a, 11b) is not available.

3. Method according to claim 1,
**characterized in that** the SMS message (5) is temporarily stored if the desired alternative terminal device (11a, 11b) is not available, and **in that** the SMS message (5) is delivered as soon as the desired alternative terminal device (11a, 11b) becomes available again.

4. Method according to claim 1,
**characterized in that** the forwarding to an alternative terminal device (11a, 11b) is carried out using the Session Initiation Protocol (SIP) or the SIP/SIMPLE protocol.

5. System for switching SMS messages (5) within a telecommunications network (3), in which an SMS message (5) generated by a mobile terminal (11a, 11b) or a stationary message generating unit arrives at an SMS routing server (7) after receipt in a switching unit (4) of the network operator and before being forwarded to a message service unit (6), which routing server filters the incoming SMS message (5) with respect to defined distribution criteria, wherein a supplementary routing server (8) uses alternative addresses of the alternative terminals (11a, 11b) or service server of the user (10) that are stored in a profile database (9) and are configured by the user (10) in accordance with desired alternative terminals (11a, 11b) implemented in the manner of a mobile telephone, PDA, television with digital receiving section or personal computer (PC) as the defined distribution criteria in order to forward the incoming SMS messages (5') for the user (10) to at least one terminal (11a, 11b) of his choice, wherein the SMS message (5') is converted into an appropriate data format in accordance with the desired terminal type, **characterized in that** the alternative addresses are implemented in the form of telephone numbers, wherein, for a prior ascertainment of availability of the alternative terminal device (11a, 11b) as needed when an SMS message (5) is present that is to be transmitted thereto, the routing server (8) only transmits the SMS message (5') to the alternative terminal device (11a, 11b) after receiving a connection setup acknowledgement (ACK) of the alternative terminal device (11a, 11b), wherein the SMS messages (5) that serve to signal received MMS, that facilitate use in conjunction with WAP push, or that serve to transmit ring tones or group logos are detected based on their specific encoding in order to suppress forwarding to alternative terminals (11a, 11b) or to carry out forwarding as a function of user-specific settings in this regard.

6. System according to claim 5,
**characterized in that** the routing server (8) sets up the connection to the alternative terminal (11a, 11b) by means of SIP-INVITE request.

7. System according to claim 5,
**characterized in that** the routing server (8) only transmits the SMS message (5') to the alternative terminal (11a, 11b) after receiving a connection setup acknowledgement (ACK) from the alternative terminal (11a, 11b).

## Revendications

1. Procédé pour la transmission de messages SMS (5) dans un réseau de télécommunications (3), dans lequel un message SMS (5) généré par un terminal mobile (1) ou une unité de création de messages stationnaire est transmis à un serveur de routage de SMS (7) après réception par un dispositif de transmission (MSC) appartenant à l'exploitant du réseau avant retransmission à une unité de service de messagerie (6), au moyen duquel le message SMS (5) entrant est filtré selon des critères de distribution définis, les critères de distribution définis utilisés étant des adresses alternatives des terminaux alternatifs (11a,11b) ou du serveur de service de l'utilisateur (10) stockées dans une base de données de profil (9) qui auparavant ont été configurées directement par l'utilisateur (10) en fonction des terminaux alternatifs souhaités (11a, 11b) qui ont la forme d'un téléphone mobile, d'un PDA, d'un téléviseur à récepteur numérique ou d'un ordinateur personnel (PC) pour transmettre les messages SMS entrants (5') destinés à l'utilisateur à au moins un terminal (11a,11b) de son choix, le message SMS (5') étant converti en un format de données adapté au type de terminal souhaité, **caractérisé en ce que** les adresses alternatives ont la forme de numéros de téléphone et que la disponibilité du terminal alternatif (11a,11b) est constatée en cas de besoin en présence d'un message SMS (5) à lui transmettre au moyen d'un acquittement d'établissement de la connexion (ACK), avant que le message SMS (5') prévu à cet effet ne lui soit transmis, les messages SMS (5) servant à la signalisation de MMS reçus, à l'utilisation liée au WAP-Push, à la transmission de sonneries ou de logos de groupes étant reconnus au moyen de leur code spécifique afin d' interdire la transmission aux terminaux alternatifs (11a,11b) ou pour effectuer une transmission en fonction de réglages spécifiques à l'utilisateur se rapportant à cette application.

2. Procédé selon revendication 1,
**caractérisé en ce que** le message SMS (5) est envoyé par des moyens traditionnels par l'unité de service de messagerie (6), si le terminal alternatif souhaité (11a, 11b) n'est pas disponible.

3. Procédé selon la revendication 1,
**caractérisé en ce que** le message SMS (5) est stocké temporairement, si le terminal alternatif souhaité (11a, 11b) n'est pas disponible et que le message SMS (5) est délivré, dès que le terminal alternatif souhaité (11a,11b) est à nouveau disponible.

4. Procédé selon la revendication 1,
**caractérisé en ce que** la transmission à un terminal alternatif (11a, 11b) est effectuée selon le Session Initiation Protocol (SIP) ou protocole SIP/SIMPLE.

5. Système de transmission de messages SMS (5) dans un réseau de télécommunications (3) dans lequel un message SMS (5) généré par un terminal mobile (11a, 11b) ou bien une unité de création de messages stationnaire (5) après réception par un dispositif de transmission (4) appartenant à l'exploitant du réseau et avant retransmission à une unité de service de messagerie (6) est envoyé à un serveur de routage de SMS (7) qui filtre le message SMS entrant (5) selon des critères de distribution définis, un serveur de routage complémentaire (8) utilisant les adresses alternatives des terminaux alternatifs (11a, 11b) ou du serveur de service de l'utilisateur (10) stockées dans une base de données de profil (9) comme critères de distribution définis, qui ont été auparavant configurées directement par l'utilisateur (10) en fonction des terminaux alternatifs souhaités (11a, 11b) et qui ont la forme d'un téléphone mobile, d'un PDA, d'un téléviseur à récepteur numérique ou d'un ordinateur personnel (PC) pour transmettre les messages SMS reçus (5') destinés à l'utilisateur à au moins un terminal (11a,11b) de son choix, le message SMS (5') étant converti en un format de données adapté au type de terminal souhaité
**caractérisé en ce que** les adresses alternatives ont la forme de numéros de téléphone et dans lequel pour une constatation préalable de la disponibilité du terminal alternatif (11a,11b) en cas de besoin en présence d'un message SMS (5) à lui transmettre, le serveur de routage (8) transmet le message SMS (5') au terminal alternatif (11a, 11b) seulement après réception de l'acquittement de l'établissement de connexion (ACK) du terminal alternatif (11a, 11b), les messages SMS (5) servant à la signalisation de MMS reçus, à une utilisation liée au WAP-Push, à la transmission de sonneries ou de logos de groupes étant reconnus au moyen de leur code spécifique, afin d'interdire la transmission aux terminaux alternatifs (11a,11b) ou pour effectuer une transmission en fonction des réglages spécifiques à l'utilisateur se rapportant à cette application.

6. Système selon la revendication 5
**caractérisé en ce que** le serveur de routage (8) établit la connexion avec le terminal alternatif (11a, 11b) au moyen d'une requête SIP-INVITE.

7. Système selon la revendication 5,
**caractérisé en ce que** le serveur de routage (8) transmet le message SMS (5') au terminal alternatif (11a, 11b) seulement après réception d'un acquittement de l'établissement de la connexion du terminal alternatif (11a, 11b).
